# EUROPÄISCHE PATENTANMELDUNG

(11) **EP 1 058 068 A2**
(43) Veröffentlichungstag der Anmeldung: **06.12.2000**
(21) Anmeldenummer: 00111640.9
(22) Anmeldetag: 31.05.2000
(51) Int. Cl.: F24J 2/48

(54) **Absorber für den Einsatz in thermischen Solarkollektoren**

(30) Priorität: 04.06.1999 DE 19925245
(71) Anmelder: Ackmann, Dirk, 31840 Hessisch Oldendorf (DE)
(72) Erfinder: Ackmann, Dirk, 31840 Hessisch Oldendorf (DE); Broda, Holger, 28844 Weyhe (DE)
(74) Vertreter: Läufer, Martina, Dipl.-Chem. rer. nat.

(57) **Zusammenfassung**

Der Absorber wird aus einer Absorbtionsschicht (1) und einer gezielten Elastomerbeschichtung (24) in einem Vulkanisations- und Umformungsprozess so hergestellt, dass ein stabiler, korrosionsgeschützter und kostengünstiger Absorber entsteht, in welchem die Wärme der Absorbtionsschicht sehr gut in die Wärmeträgeflüssigkeit überführt wird. Der neue Absorber eignet sich aufgrund der speziellen Eigenschaften der verwendeten Elastomere und der Absorbtionsschicht (1) für den Einsatz in Sonnenkollektoren, bei welchem eine Gewichts- und Herstellkostenreduzierung angestrebt wird sowie für den Einsatz mit frostschutzfreien Wärmeträgerflüssigkeiten oder korrosiven Medien.

## Beschreibung

Die Erfindung betrifft einen Absorber für den Einsatz in thermischen Solarkollektoren, bestehend aus einer Absorptionsschicht und Elastomerschichten.

Thermische Solarkollektoren bestehen im wesentlichen aus einem Gehäuse, in welchem ein Absorber die Sonneneinstrahlung in Wärme umwandelt. Die Wärme wird mit einer Wärmeträgerflüssigkeit in Kanälen, die unter oder auch in der Absorberoberfläche liegen, zu einem Wärmetauscher abgeführt.

Absorber mit Metallkanälen werden z.Zt. aus Rohrabschnitten zusammengelötet bzw. aus tiefgezogenen Blechen geformt und verschweißt. Damit auch ein Winterbetrieb der Solaranlage möglich ist, wird die Wärmeträgerflüssigkeit mit Frostschutzmitteln versetzt. Daher ist in diesem Fall zur Trinkwassererwärmung ein spezieller Speicher zum Wärmeaustausch nötig.

Des weiteren sind Absorber mit Kanälen gänzlich aus Elastomeren bzw. aus auf Metallblechen direkt aufvulkanisierten Elastomeren bekannt (WO 83/01831 A1).

Eine Aufgabe der Erfindung besteht daher darin, die aufwendige und kostenintensive Herstellung der Ganzmetallsabsorber zu vermeiden. Eine weitere Aufgabe besteht darin, den Wirkungsgrad des Absorbers zu verbessern. Eine weitere Aufgabe besteht darin, den Betrieb zur Trinkwassererwärmung im Winter ohne Frostschutzmittel und ohne Wärmetauscher zu ermöglichen. Weiterhin besteht eine Aufgabe darin, die Systemkosten zu senken und das Absorbergewicht zu reduzieren Schließlich soll die Langzeithaltbarkeit verbessert und die starke undefinierte Verformung beim Durchströmen des Wärmeträgermediums bei Gummi-bzw. Gummimetall-Absorbern vermieden werden. Die Einsatzgebiete des Absorbers sollen erweitert werden.

Diese Aufgaben werden durch einen Absorber für den Einsatz in thermischen Solarkollektoren, die generell aus einer Absorptionsschicht und Elastomerschichten bestehen, gelöst, indem der Absorptionsschicht eine wärmeleitende Elastomerschicht und dieser eine weitere Elastomerschicht unterliegt, wobei zwischen den Elastomerschichten Kanäle für einen Wärmeträger ausgebildet sind.

Die mit der Erfindung erzielten Vorteile bestehen insbesondere darin, dass durch die hohe reversible Dehnbarkeit der Absorberschichten beim Gefrieren von Wasser, die durch die Verwendung von Elastomeren erreicht wird, die Leitungen im Gegensatz zu Ganzmetallabsorbern nicht beschädigt werden und somit auf Frostschutzmittel verzichtet werden kann (inhärente Frostsicherheit). Dadurch ist als umweltfreundliches Wärmeträgermedium Trinkwasser einsetzbar, und auf Solarwärmetauscher kann verzichtet werden. Dieser Verzicht in Verbindung mit der deutlich einfacheren Herstellungsweise des Absorbers ermöglicht eine weitgehende Reduzierung der Systemkosten von Solaranlagen. Außerdem ergibt sich aus technischer Sicht ein verbesserter Wirkungsgrad als bei heute vorhandenen Systemen.

Vorzugsweise besteht die Absorptionsschicht aus Metall, sie kann jedoch auch aus einem anderen form- und hitzestabilen, gut wärmeleitenden Material hergestellt werden.

Die der Absorptionsschicht unterliegende (d.h. der Bestrahlungsseite abgewandte) wärmeleitende Elastomerschicht ist vorzugsweise dünn, damit die Wärme möglichst ungehindert an den Wärmeträger weitergegeben werden kann. Sie dient jedoch dem Korrosionsschutz, wobei sie den Wärmeträger von der Absorptionsschicht trennt. Die wärmeleitende Elastomerschicht ist vorzugsweise dünner als die weitere, auf sie aufgebrachte Elastomerschicht, die zur Unterseite des Absorbers hin, d.h. auf der Rückseite oder bestrahlungsabgewandten Seite angeordnet ist. Diese weitere Elastomerschicht auf der Rückseite des Absorbers ist in bevorzugter Ausführungsform deutlich weniger wärmeleitend bis isolierend, so dass die in das Wärmeträgermedium eingebrachte Wärme nicht durch die Absorberrückseite in die Umgebung abgegeben und der Nutzung dadurch entzogen wird.

Vorzugsweise besteht die wärmeleitende Elastomerschicht aus einem mit Metallteilchen gefüllten Elastomer. In einem derzeitig bevorzugten Ausführungsbeispiel werden Aluminiumteilchen verwendet. Es könnten jedoch auch andere Metallteilchen bzw. anderes Metallpulver verwendet werden, beispielsweise Cu-Teilchen.

Bei einem bevorzugten Ausführungsbeispiel der Erfindung spiegelt sich das durch die Kanäle in der Fläche zwischen den Elastomerschichten gebildete Leitungs- oder Kanalmuster in einer reliefartigen Form in der Absorptionsschicht wieder. Durch die stützende und verstärkende Wirkung der Absorptionsschicht werden die Kanäle, die sich zwischen den Elastomerschichten befinden, wirkungsvoll offengehalten.

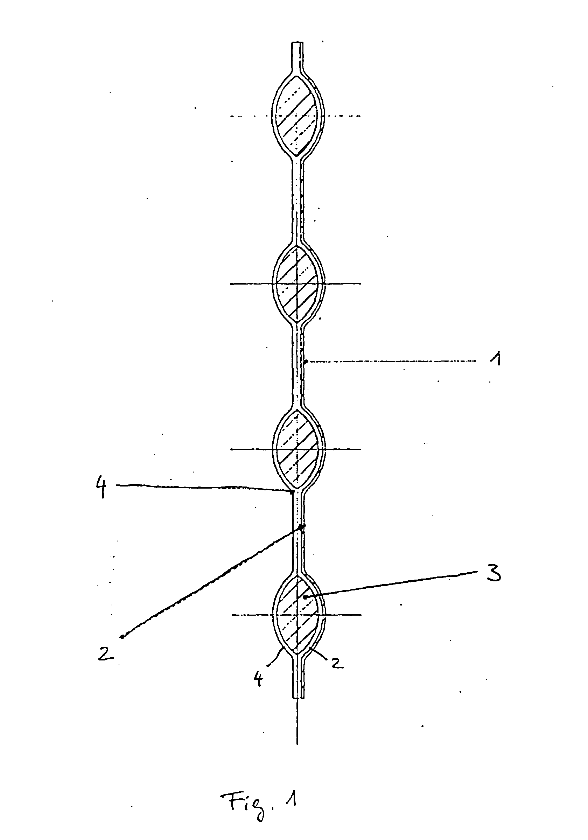

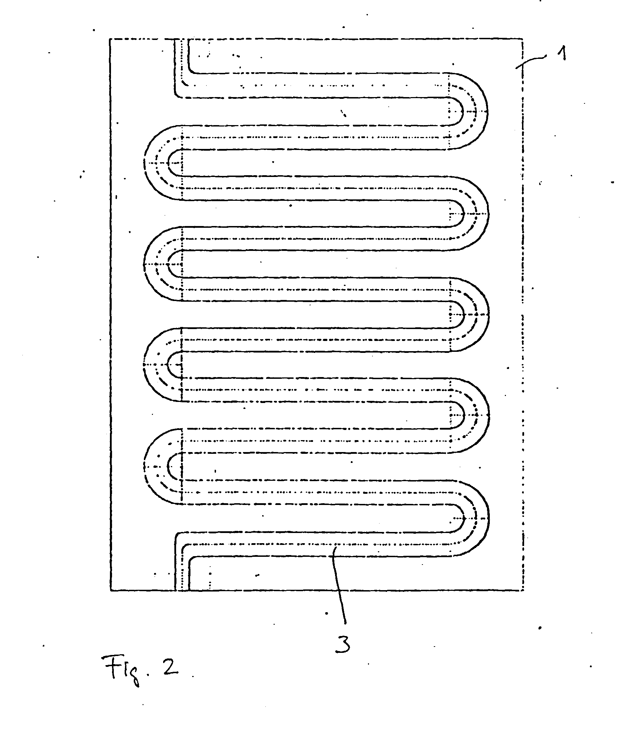

Die Kanäle können dabei besonders günstig durch Auftragen eines Haftverhinderers auf wenigstens eine der Elastomerschichten in Form des vorgesehenen Kanalmusters, zusammenfügen der Elastomerschichten, Vulkanisieren und anschließendes Umformen der mit den Elastomerschichten in geeigneter Weise verbundenen Absorptionsschicht unter Druck erzeugt werden. Dieses Beispiel ist nachfolgend genauer in Figuren 1 und 2 beschrieben.

In alternativer Ausführungsform könnten die Kanäle auch durch nutartige Vertiefungen in wenigstens einer der Elastomerschichten ausgebildet sein.

Anstelle einer Heißvulkanisation von Rohelastomeren untereinander oder mit Elastomeren sowie über Haftvermittler mit Metall, kann auch ein Verkleben der Materialien untereinander erfolgen.

Da bei dem hier vorgestellten Absorbertyp zwischen der Absorptionsschicht und der Wärmeträgerflüssigkeit eine spezielle dünne wärmeleitende aber vor Korrosion schützende Elastomerschicht eingebracht wurde, ist ein Betrieb mit korrosiven Medien, z.B. Meerwasser, auch ohne kostenintensiven Edelmetalleinsatz möglich. Zusätzlich ist auch die erforderliche Langzeithaltbarkeit, welche bei den bisher bekannten Gummi-Metallabsorbern durch das Hinterrosten de Anvulkanisationsflächen von Metallteil und Elastomerkanal nicht zu erreichen ist, jetzt gegeben.

Dadurch, dass die Wärmeträgerflüssigkeit die Absorberplatte direkt hinter der dünnen speziellen wärmeleitenden Elastomerschicht hinterströmt und keine gelöteten, geschweißten oder geklemmten Verbindungen wie bei herkömmlichen Sammelleitungen aus Metall nötig sind, ist eine besonders gute Wärmeübertragung in die Wärmeträgerflüssigkeit gewährleistet, sodass der Wirkungsgrad gegenüber herkömmlichen Systemen verbessert wird. Demgegenüber ist durch die sehr geringe Wärmeleitfähigkeit des für die Absorberrückseite verwendeten Elastomerwerkstoffes eine gute Isolierung der Umgebung erreicht.

Da bei den herkömmlichen Gummi- bzw. Gummi-Metallabsorbern die notwendigen Zirkulationskanäle durch den Druck der Wärmeträgerflüssigkeit geöffnet werden, kommt es zwangsläufig bei leicht gebauten Absorbern, d.h. ohne besondere konstruktive Verstärkungen, zu Verformungen der kompletten Absorberplatte und damit verbundenen An- und Einbauproblemen. Absorber mit den nötigen Verstärkungen werden hingegen relativ schwer. Beim hier beschriebenen Absorbertyp hingegen, sind die Zirkulationskanäle permanent geöffnet und werden vorzugsweise einmalig während der Fertigung durch Druckumformung erzeugt; sie können daher ohne besonderen zusätzlichen Druck durchströmt werden. Der Absorber verformt sich bei Betrieb nicht.

Darüberhinaus kann die Geometrie der Flüssigkeitskanäle durch flexible Beschichtungsmöglichkeiten der Elastomerplatte sowie Umformmöglichkeiten der Absorptionsschicht sehr frei gestaltet werden.

Die Wirkungsweise der Erfindung beruht im wesentlichen auf der Kombination der Werkstoffe Elastomer und Absorptionsschicht-Werkstoff, insbesondere der Umformbarkeit und wärmeleitenden Funktion der Absorptionsschicht und den speziellen Eigenschaften der verwendeten Elastomere.

Wird nun das Wärmeträgermedium in den Absorber eingeleitet, durchströmt dieses das vorgeformte Leitungssystem und kann die über die Sonneneinstrahlung erzeugte Wärme von der Absorptionsschicht sehr gut aufgenommen und an die wärmeleitfähige Elastomerschicht weitergegeben werden. Durch diese besondere Konstruktion, ist der Querschnitt des Leitungssystems genau dort am größten, wo auch die Wärmeübertragung vom Elastomer ins Medium stattfindet. Damit ist an dieser Stelle eine besonders gute Wärmeübertragung, jedoch wegen der schlechten Wärmeleitfähigkeit des verwendeten Elastomers an der Absorberrückseite dort eine schlechte Wärmeübertragung gewährleistet.

Ausführungsbeispiele für die Erfindung sind in der Zeichnung dargestellt und werden im folgenden näher beschrieben; im einzelnen zeigen:
- Fig. 1: einen Absorber in einer Querschnittsansicht;
- Fig. 2: den Absorber aus Fig. 1 in Draufsicht;
- Fig. 3: eine Querschnittsansicht eines zweiten Absorber-Ausführungsbeispiels
- Fig. 4: eine Querschnittsansicht eines dritten Absorber-Ausführungsbeispiels

In Figur 1 ist eine Absorptionsschicht 1 zu sehen, welche nach dem Reinigen eine ganzflächige Beschichtung mit einem Haftvermittler erfährt. Auf die Absorptionsschicht wird zur verbesserten Wärmeübertragung eine spezielle wärmeleitende Elastomerschicht 2 aufvulkanisiert. Die Elastomerschicht hat ihrerseits eine selektive Beschichtung erhalten, d.h., die Stellen, welche Kanäle des Absorbers bilden sollen, werden mit Haftverhinderer beschichtet.

Im nächsten Arbeitsschritt wird die Absorptionsschicht 1, das wärmeleitende Rohelastomer 2 und ein weiteres Rohelastomer 4 welches später die Absorberrückseite bildet, in eine Vulkanisierform eingelegt und zusammenvulkanisiert. Bei diesem Vorgang kommt es zu einer dauerhaften Verbindung der mit Haftvermittler behandelten Stellen und der Elastomerschichten.

In einem weiteren Arbeitsgang werden Anschlüsse im Bereich der durch den Haftverhinderer erzeugten Trennschicht angebracht und die Platte in eine Vorrrichtung eingelegt. Mittels hydraulischen Druckes wird aus dem durch das besondere Beschichtungsverfahren entstandene Leitungssystem heraus die Umformung der Absorptionsschicht vorgenommen. Der Absorber kann nun in das Kollektorgehäuse eingebaut werden.

Die Fig. 2 zeigt eine Draufsicht auf das Ausführungsbeispiel aus Fig. 1.

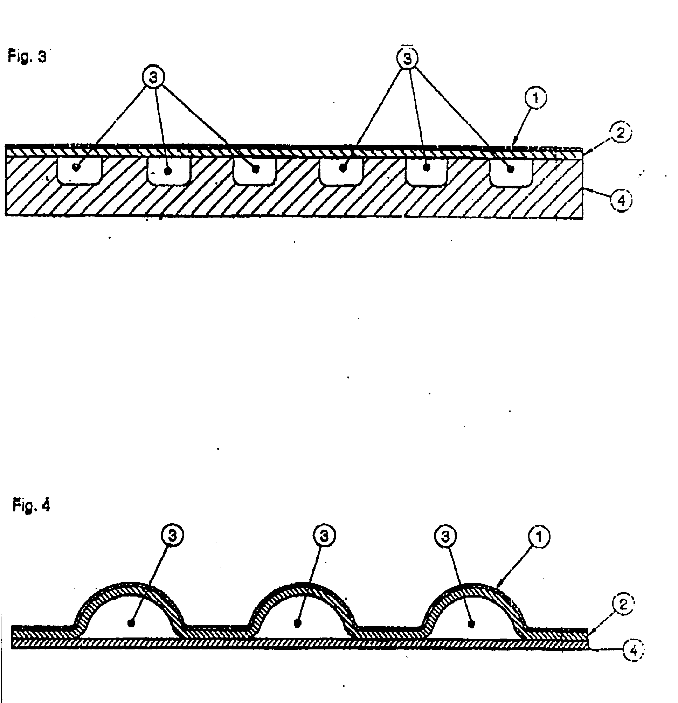

Fig. 3 zeigt ein alternatives Ausführungsbeispiel: Eine als Absorptionsschicht 1 vorgesehene Metallplatte wird gereinigt und vollständig mit Haftvermittler beschichtet. Auf die beschichtete Metallplatte wird eine dünne Schicht eines wärmeleitenden noch nicht vulkanisierten Rohelastomers 2 aufgebracht. hierauf wird wiederum eine Platte aus einem weiteren nicht-wärmeleitenden Elastomer 4 aufgelegt, in die nutförmige Vertiefungen in Form des Leitungsmusters für den Wärmeträger eingeschnitten, gepresst oder gestanzt sind. Die Vertiefungen in der Platte werden beim Auflegen durch die dünne Elastomerschicht 2 verschlossen, so dass sich Kanäle oder Leitungen bilden. Dabei bilden die Kanäle 3 vorzugsweise ein in sich geschlossenes Leitungssystem, mit wenigstens je einem Ein- und Ausgang an den Plattenrändern, bzw. den Absorberrändern. Anschließend werden die Schichten zusammen heißvulkanisiert, i.a. in einer Vulkanisationsform. Da die Absorptionsschicht 1 in diesem Beispiel nicht verformt wird, kann sie auch vorteilhaft aus einem anderen wärmeleitfähigen, hitzebeständigen Material bestehen.

Fig. 4 zeigt ein drittes Ausführungsbeispiel für die Erfindung: Eine Absorptionsschicht 1 aus Metall wird nach dem Reinigen ganzflächig mit einem Haftvermittler beschichtet und hierauf wird eine dünne, speziell wärmeleitende Elastomerschicht 2 aufvulkanisiert. Diese Schicht besteht vorzugsweise aus einem Elastomer, das mit Aluminiumpulver gefüllt ist. In einem weiteren Arbeitsgang werden die verbundenen Platten in eine Pressvorrichtung eingelegt und mittels Druck so umgeformt, dass das Muster des Leitungssystems reliefartig auf der Platte erscheint. Die Platte wird ggf. weiter auf der Elastomerseite mit einem weiteren Haftvermittler bestrichen, bzw. berollt, wobei dieser nur die nicht-vertieften Bereiche bedeckt, so dass die späteren Leitungen oder Kanäle 3 freibleiben. Auf die aus Absorptionsschicht 1 und wärmeleitenden Elastomer 2 bestehende verformte Platte wird nun elastomerseitig eine Platte aus einem handelsüblichen Rohelastomer 4 aufgelegt und die drei Schichten werden gemeinsam in eine Vulkanisationsform eingelegt und zusammen vulkanisiert. Bei diesem Vorgang kommt es zu einer dauerhaften Verbindung zwischen allen drei Schichten bei gleichzeitiger Ausbildung des Leitungssystems durch die freigehaltenen Kanäle 3. Alternativ können die Schichten auch verklebt werden.

## Patentansprüche

1. Absorber für den Einsatz in thermischen Solarkollektoren, bestehend aus einer Absorptionsschicht (1) und
Elastomerschichten (2,4),
**dadurch gekennzeichnet,**
dass der Absorptionschicht (1) eine wärmeleitende Elastomerschicht (2) und dieser eine weitere Elastomerschicht (4) unterliegt, wobei zwischen den Elastomerschichten (2,4) Kanäle (3) für einen Wärmeträger ausgebildet sind.

2. Absorber nach Anspruch 1, bei welchem die Absorptionsschicht (1) aus Metall besteht.

3. Absorber nach Anspruch 1 oder 2, bei welchem die wärmeleitende Elastomerschicht (2) dünner als die weitere, zur Unterseite des Absorbers angeordnete Elastomerschicht (4) ist.

4. Absorber nach einem der Ansprüche 1 bis 3, bei welchem die weitere Elastomerschicht (4) weniger wärmeleitend bis isolierend ist.

5. Absorber nach einem der Ansprüche 1 bis 4, bei welchem die wärmeleitende Elastomerschicht (2) aus einem mit Metallteilchen gefüllten Elastomer besteht.

6. Absorber nach einem der Ansprüche 1 bis 5, bei welchem sich das durch die Kanäle (3) in der Fläche zwischen den Elastomerschichten (2,4) gebildete Muster in einer reliefartigen Form in der Absorptionsschicht (1) widerspiegelt.

7. Absorber nach einem der Ansprüche 1 bis 6, bei welchem die Kanäle (3) durch nutartige Vertiefungen in wenigstens einer der Elastomerschichten (2,4) gebildet werden.

8. Absorber nach einem der Ansprüche 1 bis 7, bei welchem die Elastomerschichten durch Vulkanisation verbunden sind.

9. Absorber nach einem der Ansprüche 1 bis 6, bei welchem die Kanäle (3) durch Auftragen eines Haftverhinderers auf wenigstens eine der Elastomerschichten (2,4) in Form des vorgesehenen Kanalmusters, zusammenfügen der Elastomerschichten (2,4), Vulkanisieren und anschließende Umformung der mit den Elastomerschichten (2,4) in geeigneter Weise verbundenen Absorptionsschicht (1) unter Druck erzeugt werden.
